# EUROPÄISCHE PATENTANMELDUNG

(11) **EP 1 174 630 A1**
(43) Veröffentlichungstag der Anmeldung: **23.01.2002**
(21) Anmeldenummer: 01117252.5
(22) Anmeldetag: 17.07.2001
(51) Int. Cl.: F16D 3/77

(54) **Verbindungsanordnung**

(30) Priorität: 22.07.2000 DE 10035752
(71) Anmelder: ZF FRIEDRICHSHAFEN Aktiengesellschaft, 88038 Friedrichshafen (DE)
(72) Erfinder: Leber, Fritz, 88048 Friedrichshafen (DE)

(57) **Zusammenfassung**

Die Erfindung betrifft eine Anordnung zum Verbinden der Ausgangswelle eines Antriebsmotors für ein Kraftfahrzeug mit der koaxial zur Antriebswelle starr gelagerten Eingangswelle des Getriebes mit Hilfe einer Zwischenwelle (5), die Winkelabweichungen zwischen den beiden Wellen ausgleicht. Zu diesem Zweck ist Eingangswelle und Ausgangswelle je mit einem ringförmigen Flansch (3, 4) versehen, wobei die beiden Flansche mit der Zwischenwelle über je eine flexible Membran (6, 7) verbunden sind.

## Beschreibung

Die vorliegende Erfindung betrifft eine Anordnung zur Verbindung der Ausgangswelle eines Antriebsmotors für ein Kraftfahrzeug mit der koaxial zur Ausgangswelle gelagerten Eingangswelle des Getriebes nach dem Oberbegriff des Anspruchs 1.

Es gibt Kraftfahrzeuge, bei denen am freien Ende der Ausgangswelle des Motors ein Schwungrad angeordnet ist, an welchem eine Kupplungsscheibe und eine Kupplungsabdeckung angeordnet sind. Das Schwungrad weist eine Reibfläche auf, die der Reibfläche der Kupplungsscheibe gegenüberliegt. Wird die Reibfläche der Kupplungsscheibe gegen die Reibfläche des Schwungrades gedrückt, so wird das Drehmoment des Antriebsmotors auf die Kupplungsscheibe übertragen und von dort in das Getriebe des Fahrzeugs eingeleitet.

Es ist bekannt, die Ausgangswelle des Antriebsmotor mit dem Schwungrad über eine flexible Scheibe zu verbinden, die in radialer Richtung starr und in Biegerichtungen elastisch verformbar ist, wobei die Biegerichtungen als die Richtungen einer elastischen Deformation der flexiblen Scheibe in einer im wesentlichen durch die Längsachse der Ausgangswelle verlaufenden Linie definiert werden. Die Biegerichtungen werden außerdem als die Richtungen um den Schnittpunkt der Längsachse der Ausgangswelle mit dem Mittelpunkt der flexiblen Scheibe definiert. Die flexible Scheibe dient dazu, vom Antriebsmotor ausgehende Biegeschwingungen zu absorbieren.

So beschreibt die DE C 196 43 659 eine flexible Scheibenanordnung zum Übertragen des Drehmoments von der Ausgangswelle eines Antriebsmotors für ein Kraftfahrzeug auf das Schwungrad und zum Absorbieren von zwischen diesen Teilen auftretenden Biegeschwingungen. Diese Anordnung weist eine erste Scheibe auf, die an dem Schwungrad und dem freien Ende der Kurbelwelle zwischen dem Schwungrad und der Kurbelwelle angeordnet ist und die in Umfangsrichtung starr, in Axialrichtungen hingegen flexibel ist sowie eine mit der ersten Scheibe zu gemeinsamer Drehung zwischen dem Schwungrad und der Kurbel verbundene reibungserzeugende Einrichtung, welche zwischen sich und der ersten Scheibe bei einer elastischen Deformation der ersten Scheibe in Axialrichtung Reibung erzeugt. Diese reibungserzeugende Einrichtung weist eine zweite Scheibe und ein zwischen der ersten und der zweiten Scheibe angeordnetes Reibungsteil auf, wobei die zweite Scheibe und das Reibungsteil an der ersten Scheibe zu gemeinsamer Drehung mit ihr fest angeordnet sind.

Damit wird eine erhöhte Dämpfung von Biegeschwingungen in der Schwungradanordnung ermöglicht.

Die DE A 198 40 215 beschreibt ein Schwungrad, das mit der Ausgangswelle des Abtriebsmotors eines Kraftfahrzeuges verbunden ist und das als elastisch verformbare flexible Platte ausgebildet ist, die eine elastisch verformbare Kompressionsplatte mit kleinerem Durchmesser als die flexible Platte aufweist, wobei eine Schwungradmasse als Trägheitskomponente vorgesehen ist. Die flexible Platte ist an ihrem äußeren Ende an der Schwungradmasse angebracht, wobei mit Hilfe der flexiblen Platte und der Schwungradmasse die Kompressionsplatte derart komprimiert und gelagert ist, dass diese mittels elastischer Verformung mit der Schwungradmasse in Anlagekontakt gelangt.

Bei Kraftfahrzeugen, bei denen die Kupplung in das Getriebe integriert ist oder die mit einem Automatgetriebe ausgestattet sind, sind die Ausgangswelle des Motors und die Eingangswelle des Getriebes jeweils für sich fest gelagert, sodass es während des Einsatzes des Kraftfahrzeuges zu Verspannungen der Verbindungselemente für Ausgangswelle und Eingangswelle kommt, die bei ungünstigen Betriebsbedingungen zum Bruch dieser Teile oder zu Lagerschäden führen können.

Um diese Nachteile zu vermeiden, ist es bekannt, die Ausgangswelle des Motors mit der Eingangswelle des Getriebes über eine Zwischenwelle zu verbinden, wobei an der Ausgangswelle des Motors ein Flansch mit einer innen angeordneten Verzahnung und an der Eingangswelle des Getriebes ebenfalls ein Flansch mit Innenverzahnung vorgesehen sind; die Zwischenwelle weist an ihren beiden Enden Bogenverzahnugnen auf, die in die Innenverzahnungen der Flansche der beiden Wellen mit Spiel eingreifen, um so eine Drehmomentübertragung von der Ausgangswelle zur Eingangswelle auch bei Winkelabweichungen der beiden koaxialen Achsen von Ausgangswelle und Eingangswelle zu ermöglichen. Diese Drehmomentübertragung mit Hilfe der Bogenverzahnungen weist jedoch noch den Nachteil von hohen Herstellungskosten und einer während des Einsatzes erforderlichen Schmierung der Zahnkranzverbindungen auf. Durch die Drehungleichförmigkeiten des Antriebsmotor für das Kraftfahrzeug können die Verzahnungen klappern und relativ schnell verschleißen.

Aufgabe der vorliegenden Erfindung ist es, eine Verbindungsanordnung für die Ausgangswelle eines Antriebsmotors für ein Kraftfahrzeug mit der koaxial zur Ausgangswelle starr gelagerten Eingangswelle des Getriebes zu schaffen, die durch Konzentrizitäts- und Winkelabweichungen auftretende Fehler und Toleranzen ausgleicht, die billig in der Herstellung ist, die eine lange Lebensdauer aufweist und die keinerlei Geräusche während des Betriebes des Kraftfahrzeuges erzeugt.

Ausgehend von einer Anordnung der eingangs näher genannten Art erfolgt die Lösung dieser Aufgabe mit den im kennzeichnenden Teil des Anspruchs 1 angegebenem Merkmal; vorteilhafte Ausgestaltungen sind in den Unteransprüchen beschrieben.

Die Erfindung geht von einer Verbindungsanordnung aus, bei der das der Eingangswelle des Getriebes zugewandte Ende der Ausgangswelle des Antriebsmotors und das der Ausgangswelle des Antriebsmotors zugewandte Ende der Eingangswelle des Getriebes je mit einem ringförmigen Flansch versehen sind, zwischen denen eine Zwischenwelle koaxial zur Antriebswelle und zur Eingangswelle angeordnet ist. Gemäß der Erfindung ist vorgesehen, dass die Zwischenwelle einerseits mit dem Flansch der Antriebswelle und andererseits mit dem Flansch der Eingangswelle über je eine flexible Membran verbunden ist.

Vorteilhafterweise sind die beiden Flansche mit einem Lochkreis zur Aufnahme von Befestigungsschrauben versehen, während die beiden Membranen sowohl einen inneren als auch einen konzentrisch dazu angeordneten äußeren Lochkreis aufweisen und einer der beiden Lochkreise der Membranen an den Lochkreis des zugehörigen Flansches angepaßt ist.

Bei starr gelagerter Eingangswelle des Getriebes trennt also die Zwischenwelle die beiden flexiblen Membranen, wobei die eine der Membranen die Ausgangswelle des Antriebsmotors bzw. dessen Schwungrad mit der Zwischenwelle verbindet und die andere Membran die Zwischenwelle mit der Eingangswelle des Getriebes verbindet.

Diese Zwischenwelle zusammen mit den Membranen gleicht die auftretenden Fehler dahingehend aus, dass jede Membran nur den in der Zwischenwelle entstandenen Winkelfehler, d. h. einerseits zwischen der Zwischenwelle und der Ausgangswelle des Motors und andererseits zwischen der Zwischenwelle und der Eingangswelle des Getriebes durch axiale Verformung der jeweiligen Membrane kompensiert.

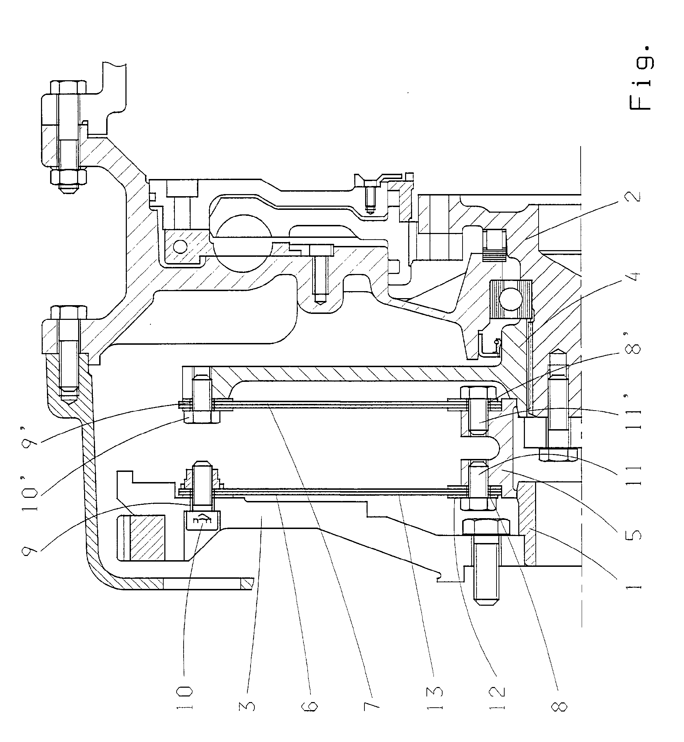

Im folgenden wird die Erfindung anhand der Zeichnung näher erläutert, wobei in der einzigen Figur ein Teilschnitt durch die erfindungsgemäße Verbindungsanordnung dargestellt ist.

In der Figur ist mit 1 die Ausgangswelle eines nicht dargestellten Antriebsmotor für ein Kraftfahrzeug bezeichnet und mit 2 die starr gelagerte Eingangswelle des zugehörigen Getriebes. Die Eingangswelle 2 ist koaxial zur Ausgangswelle 1 angeordnet. Das der Eingangswelle 2 des Getriebes zugewandte Ende der Ausgangswelle 1 des Antriebsmotors ist mit einem ringförmigen Flansch 3 versehen und das der Ausgangswelle 1 zugewandte Ende der Eingangswelle 2 ist mit einem ringförmigen Flansch 4 versehen. Mit 5 ist eine Zwischenwelle bezeichnet, die über zwei flexible Membranen 6, 7 mit den beiden Flanschen 3, 4 in flexibler Weise verbunden ist.

Zu diesem Zweck sind die beiden Flansche 3, 4 mit einem Lochkreis 9, 9' versehen zur Aufnahme von Befestigungsschrauben 10, 10', die entsprechende äußere Lochkreise in den beiden Membranen 6, 7 durchsetzen. Jede Membran 6, 7 ist ferner mit einem inneren Lochkreis versehen, der von Befestigungsschrauben 11, 11' durchsetzt wird zur Verbindung mit der Zwischenwelle 5.

Die flexiblen Membranen 6, 7 gleichen auftretende Fehler in Form von Winkelabweichungen zwischen der Ausgangswelle 1 des Motors und der Eingangswelle 2 des Getriebes durch axiale Verformung aus ohne dass Geräusche während des Betriebes des Kraftfahrzeuges entstehen. Zur besseren Verformbarkeit können die Membranen 6, 7 örtlich unterschiedliche Dicken aufweisen, beispielsweise Verstärkungen 12 im Bereich eines Lochkranzes und Stellen geringerer Dicke 13 zwischen den beiden Lochkreisen einer jeden Membran.

Beim dargestellten Ausführungsbeispiel ist die Zwischenwelle 5 mit den beiden Flanschen 3, 4 über Membranen 6, 7 verbunden, wobei die Verbindungsschrauben 10, 10' den äußeren Lochkranz einer jeden Membran 6, 7 mit dem zugehörigen Flanschen 3, 4 von Ausgangswelle und Eingangswelle verbinden, während der inneren Lochkranz einer jeden Membran 6, 7 mit der Zwischenwelle 5 verbunden ist. Dies bringt den Vorteil mit sich, dass nur eine relativ geringfügige Masse für die Zwischenwelle erforderlich ist, sodass diese leicht zentriert und axial geführt werden kann.

Bei einem anderen nicht zeichnerisch dargestellten Ausführungsbeispiel ist es auch möglich, für die Zwischenwelle 5 einen derart großen Durchmesser zu wählen, dass diese mit dem äußeren Lochkranz der beiden Membranen 6, 7 verbunden wird; in diesem Fall ist der innere Lochkranz der beiden Membranen mit der Ausgangswelle bzw. deren Schwungrad und der Eingangswelle des Getriebes zu verbinden.

### Bezugszeichen

- 1: Ausgangswelle
- 2: Eingangswelle
- 3: Flansch
- 4: Flansch
- 5: Zwischenwelle
- 6: Membran
- 7: Membran
- 8: Lochkranz
- 9: Lochkranz
- 10: Befestigungsschraube
- 11: Befestigungsschraube
- 12: Bereich
- 13: Bereich

## Patentansprüche

1. Anordnung zum Verbinden der Ausgangswelle eines Antriebsmotors für ein Kraftfahrzeug mit der koaxial zur Antriebswelle starr gelagerten Eingangswelle des Getriebes, mit einer Zwischenwelle (5), die Winkelabweichungen zwischen den beiden koaxial gelagerten Wellen während des Betriebes des Kraftfahrzeuges ausgleicht, wobei das der Eingangswelle des Getriebes zugewandte Ende der Ausgangswelle (1) des Antriebsmotors und das der Ausgangswelle des Antriebsmotors zugewandte Ende der Eingangswelle (2) des Getriebes je mit einem ringförmigen Flansch (3, 4) versehen sind, zwischen denen die Zwischenwelle (5) koaxial zur Ausgangswelle und zur Eingangswelle angeordnet ist, **dadurch gekennzeichnet, dass** die Zwischenwelle (5) einerseits mit dem Flansch (3) der Ausgangswelle (1) und andererseits mit dem Flansch (4) der Eingangswelle (2) über je eine flexible Membran (6, 7) verbunden ist.

2. Anordnung nach Anspruch 1, **dadurch gekennzeichnet, dass** die beiden Flansche (3, 4) je einen Lochkreis (9, 9') zur Aufnahme von Befestigungsschrauben aufweisen und dass die beiden Membranen (6, 7) sowohl einen inneren als auch einen konzentrisch dazu angeordneten äußeren Lochkreis aufweisen, wobei einer der beiden Lochkreise der Membranen (6, 7) an den Lochkreis (10, 10') des zugehörigen Flansches (3, 4) angepaßt ist.

3. Anordnung nach Anspruch 2, **dadurch gekennzeichnet, dass** Verbindungsschrauben (11, 11') in den inneren Lochkreis einer jeden Membran (6, 7) und in den Lochkreis (8, 8') der Zwischenwelle (5) eingesetzt sind und dass Verbindungsschrauben (10, 10') in den äußeren Lochkreis einer jeden Membran und in die Lochkreise (9, 9') der zugehörigen Flansche (3, 4) von Ausgangswelle und Eingangswelle eingesetzt sind.

4. Anordnung nach Anspruch 2, **dadurch gekennzeichnet, dass** Verbindungsschrauben in den äußeren Lochkreis einer jeden Membran und in den Lochkreis der Zwischenwelle eingesetzt sind und dass Verbindungsschrauben in den inneren Lochkreis der Membran und in den Lochkreis der zugehörigen Flansche von Antriebswelle und Eingangswelle eingesetzt sind.
